# EUROPEAN PATENT APPLICATION

(11) **EP 3 485 976 A1**
(43) Date of publication of application: **22.05.2019**
(21) Application number: 17202764.1
(22) Date of filing: 21.11.2017
(51) Int. Cl.: B03C 1/30, G01N 1/28, G02B 21/26, A61B 10/02

(54) **METHOD OF HANDLING A BIOPSY SAMPLE**

(71) Applicant: Koninklijke Philips N.V., 5656 AE Eindhoven (NL)
(72) Inventor: BOAMFA, Marius Iosif, 5656 AE Eindhoven (NL); VULDERS, Roland Cornelis Martinus, 5656 AE Eindhoven (NL); VAN DER ZAAG, Pieter Jan, 5656 AE Eindhoven (NL)
(74) Representative: de Haan, Poul Erik

(57) **Abstract**

A method of handling a biopsy sample using a magnetic field is presented as well as a system for imaging a biopsy sample with a magnetic element and for magnetically handling the biopsy sample. The handling of the sample is done by means of an external magnetic field. Such an external magnetic field can be provided by, for example, the system as exemplary shown in Figure 5, but can also be provided by a user manually. For biopsy handling the inventors of the present invention propose to attach the biopsy to a magnetic element. For example, one can glue the sample either to a permanent magnet or a ferromagnetic material. Especially cyanoacrylate has proven to be a stable glue within the clearing fluid in which biopsy samples are typically imaged. The biopsy sample can then be hold immobile during the imaging while still immersed into the clearing fluid or it can be rotated for several imaging angles within the clearing fluid by using the external magnetic element.

## Description

### FIELD OF THE INVENTION

The present invention relates to a method of handling a biopsy sample using a magnetic field. Furthermore, the present invention relates to a biopsy sample as well as to a system for imaging a biopsy sample with a magnetic element and for magnetically handling the biopsy sample.

### BACKGROUND OF THE INVENTION

It is a current interest of medical research teams to explore the options to do 3D (intact) biopsy detection with the aim of getting better and/or faster information of tumor lesions and enable better pathology and molecular analysis.

For a complete 3D analysis of a biopsy, multiple aspects are important. First, the location/orientation of the tumor inside the body, which is done via imaging. Second, the orientation of the biopsy taking inside the tumor, which is solved by registration of the biopsy needle. When taking the biopsy under image guidance and having alignment marker on the biopsy needle, one can align 3D biopsy image back to the patient. Third, the orientation of the biopsy inside the biopsy needle needs to be known to determine the orientation of the biopsy taking inside the tumor based on the orientation of the biopsy needle relative to the body of the patient. Combining the aforementioned second and third aspects makes it possible to connect the results of the pathological analysis of the biopsy to the location inside the body.

Typically, the biopsy is cleared and subsequently 3D scanned/imaged. For best results, the biopsy is kept in the clearing fluid during the imaging process, such that little or no refraction/reflection occurs at the sample surface and the light can optimally penetrate in the sample. While in this fluid, the sample still needs to be kept in a stable position during imaging and eventually manipulated - i.e. rotated and/or moved for different angle or position imaging.

Several methods are proposed in the literature but the problem remains still sub-optimally resolved. For example, the sample is kept in an optically transparent tube which is slightly larger than the biopsy and its manipulation is performed by manipulation of the tube.

### SUMMARY OF THE INVENTION

Therefore, it is an object of the present invention to provide for an improved handling of biopsy samples, in particular for an improved handling of biopsy samples in preparation of scanning the sample/imaging the sample or during such a scanning/imaging.

The object of the present invention is solved by the subject-matter of the independent claims. Further embodiments and advantages of the invention are incorporated in the dependent claims.

The described embodiments similarly pertain to the method of handling a biopsy sample, the biopsy sample and the system for imaging a biopsy sample and for magnetically handling the biopsy sample. Synergetic effects may arise from different combinations of the embodiments although they might not be described in detail.

Further on, it shall be noted that all embodiments of the present invention concerning the method, can be carried out with the order of the steps as explicitly described, nevertheless this has not to be the only and essential order of the steps of the method. The herein presented methods can be carried out with another order of the disclosed steps without departing from the respective method embodiment, unless explicitly mentioned to the contrary hereinafter.

According to a first aspect, a method of handling a biopsy sample is presented. The method comprises the steps of providing an isolated biopsy sample to which a magnetic element is attached. Further, the step of using an external magnetic element for applying a magnetic force onto the magnetic element, which is attached to the biopsy sample, to handle the biopsy sample is comprised by this method.

In other words, a method is presented for handling 3D biopsies that makes use of a magnetic field. The biopsy is attached to a magnetic element/magnetic support, e.g. a permanent or a ferromagnetic material, e.g. iron, cobalt, nickel, and it can be manipulated by means of a magnetic field and/or an electro-magnetic field.

The step of "handling the biopsy sample" can be embodied in various different manners, and several different steps may be comprised by this step of handling the biopsy sample. For example, by means of the generated magnetic force that acts on to the magnetic element of the biopsy sample, the sample can be immobilized. However, the sample can also be caused to move, for example along a linear path, due to the application of the external magnetic element. A further exemplary embodiment of handling the biopsy sample is to cause a rotation of the biopsy sample, such that different portions of the sample can be imaged by an imaging device/system from various angles. Another embodiment of "handling the biopsy sample" is deforming the biopsy sample by the application of the external magnetic element. Of course, the step of "handling the biopsy sample" can be embodied as a combination of such embodiments, e.g. as immobilizing and rotating the sample, or it can be embodied as immobilizing, linearly moving and rotating the sample.

One key advantage of this approach is that the biopsy sample can be manipulated while it is inside the clearing/index matching fluid, which might be needed for imaging, in a very simple manner from the outside of the vessel, e.g. a well, the sample is in. This approach is particularly valuable if one wants to rotate the biopsy sample so that the biopsy sample can be imaged/scanned from various angles.

A further advantage of this method is that the sample can be fixed stably in a typical well plate used for scanning various samples. In previous experiments, the inventors of the present invention had the problem that in these typically used well plates the biopsy sample would move between scans at various (optical) depths, thereby introducing motion artifacts. This problem is resolved or eliminated by the method presented herein before.

Yet another advantage is that the location of the sample is known when it is attached to the magnetic element as suggested herein. Since the sample has the same refractive index as the surrounding fluid it is difficult to detect the sample location prior to scanning when no magnetic element is present. When attached to magnets the operator can swiftly determine the location of the sample by locating the edge of the magnet and commence scanning. In one embodiment this can also be carried out automatically by the system of the present invention as will be described in more detail herein below.

In one embodiment the method comprises the step of attaching the magnetic element to the biopsy sample.

If desired the sample is fixed to the magnetic element only after it is cleared, but one could also do this step before clearing, and use the magnetic element constructively for handling during the clearing procedure.

In one embodiment the attachment is performed directly in the biopsy device. This could also help in handling the sample during the process steps before imaging. Caution needs to be taken that the attaching step does not interfere with the clearing protocol.

In one embodiment the step of attaching the magnetic element to the biopsy sample is carried out by gluing the magnetic element to the biopsy sample with a glue, preferably with a glue which is stable in a clearing fluid/ refractive index matching fluid.

According to another exemplary embodiment of the present disclosure, the step of immobilizing the biopsy sample in a fluid within a vessel by means of the application of the magnetic force of the external magnetic element is comprised.

This embodiment allows that biopsy sample can be cleared and subsequently 3D scanned/imaged. In order to achieve best results, the biopsy is kept in the clearing fluid during the imaging process, such that little or no refraction/reflection occurs at the sample surface. Still with the magnetic element, the light can optimally penetrate in the sample. Due to the magnetic element and the interaction of the magnetic field exhibited by the external magnetic element, while in this fluid, the sample still can be kept in a stable position during imaging and can eventually be manipulated/handled, e.g. rotated and/or moved for different angle or position imaging.

According to another exemplary embodiment of the present disclosure, the external magnetic element is provided outside of the vessel and the magnetic force is applied onto the magnetic element and thereby onto the biopsy sample through this vessel.

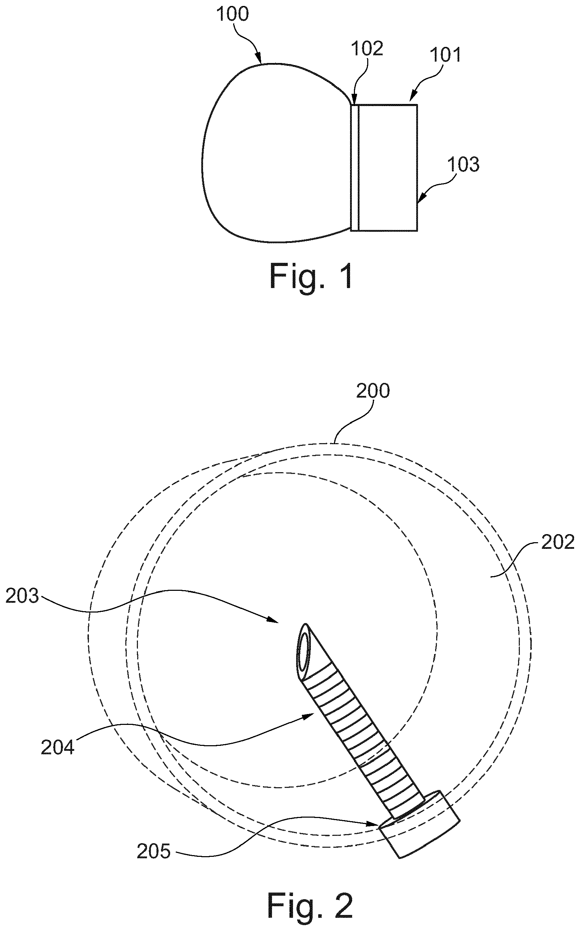

As can be gathered for example from Figure 2, permanent magnets may be used to provide for a magnetic support onto which the biopsy sample can be glued. The external magnetic element may also be embodied as a permanent magnet, which can exert its magnetic force through, for example, a glass vessel or the wall of a multi well plate onto the respective magnetic element of the biopsy sample.

According to another exemplary embodiment of the present disclosure, the method comprises the step of causing a movement of the biopsy sample, preferably a rotation, by means of the application of the magnetic force of the external magnetic element onto the magnetic element attached to the biopsy sample.

It should be noted, that also a linear movement, or a combination of a linear movement and a rotation can be relevant embodiments of the present disclosure.

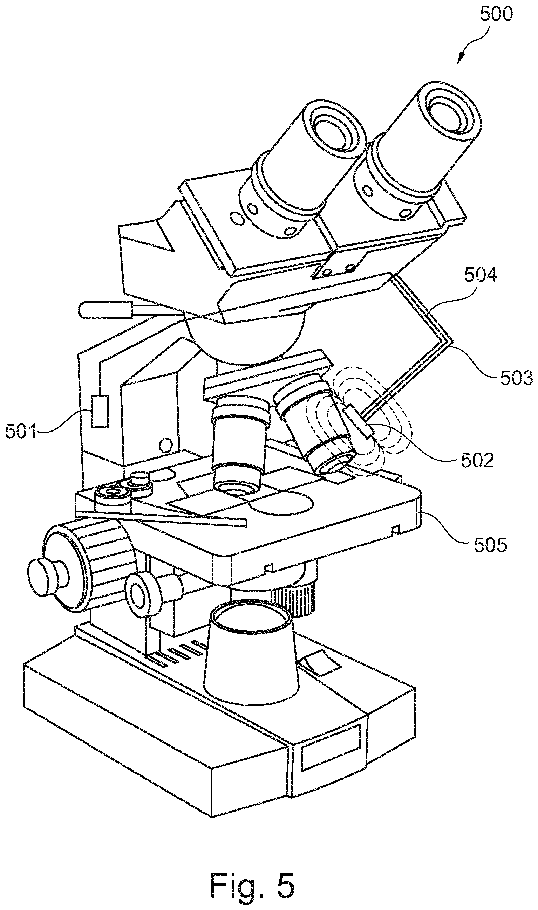

The step of causing the movement of the biopsy sample can be carried out manually, semi-automatically, or automatically, e.g. by a system for imaging a biopsy sample as for example shown in Figure 5. This movement of the sample may be caused after the position of the sample was determined. Also this determination of the sample position can be carried out manually, semi-automatically, or automatically, e.g. by said system. First, the position of the magnetic element may be determined due to a high contrast of the magnetic element. This may be done manually or by e.g. an image processing unit of an imaging device of said system. Since the relative position of the sample with respect to the magnetic element is known by the user and/or the system, the position of the sample can be determined. The movement may then be caused as a function of said determined sample position. For example, an adjustment of the sample position in the X-Y-plane is desired, which is typically perpendicular to the optical axis of the imaging device of said system shown in Figure 5. In such a case a positioning system, e.g. an X-Y-stage may be activated to move the sample into the desired position. Also a re-orientation of the sample may be caused based on the determined sample position. Thus, an extra rotation step may be carried out to rotate the sample relative to the imaging device before the imaging/scanning of the sample is started. Also this imaging/scanning can be carried out manually, semi-automatically, or automatically, e.g. by a system for imaging a biopsy sample as shown in Figure 5.

It should be noted that the position determination of the magnetic element and the subsequent position determination of the sample can be carried out in bright field mode, and alternatively in a fluorescence detection mode. In the latter, fluorescent markers on the magnetic element and/or on the sample may be used, as will be described herein in more detail.

According to another exemplary embodiment of the present disclosure, the movement of the biopsy sample, preferably the rotation of the biopsy sample, is caused during the process of imaging the biopsy sample, particularly between different imaging frames.

This process of imaging the sample can of course be part of the method presented herein and can be carried out by a system as described hereinbefore and hereinafter as another aspect of the present invention.

The movement of the biopsy sample may be caused e.g. manually by the operator of for example a microscope by manually moving the external magnetic element. Alternatively, the operator may manually adjust an electrical current of an electro-magnet being the external magnetic element. However, the movement of the biopsy sample may also be controlled and caused automatically by e.g. an imaging device/ system, which brings the biopsy sample in a desired position with respect to certain optical elements of the imaging device.

According to another exemplary embodiment of the present disclosure the method comprises the step of imaging the biopsy sample thereby creating an image of the biopsy sample. This imaging may be done from one or also from different positions. Such an imaging can e.g. be done after the sample was stabilized by the magnetic force described herein.

According to another exemplary embodiment of the present disclosure, the method comprises the step of scanning the biopsy sample by imaging the biopsy sample.

According to another exemplary embodiment of the present disclosure, the method comprises the steps of rotating the biopsy sample by means of the magnetic force and scanning the biopsy sample by imaging the biopsy sample from different rotational positions.

The imaging can be done by several different devices and imaging methods as preferred by the user of the present invention. For example, a microscope might be used, in particular, a normal microscope, an inverted microscope, a light sheet microscope or a confocal microscope. As mentioned before, other imaging devices/systems might also be used.

According to another exemplary embodiment of the present disclosure, the isolated biopsy sample is provided together with the attached magnetic element within a clearing fluid/a refractive index matching fluid in a vessel. Furthermore, the isolated biopsy sample is imaged within the clearing fluid/refractive index matching fluid in the vessel.

In order to achieve best optical results, the biopsy sample is kept in the clearing fluid during the imaging process, such that little or no refraction/reflection occurs at the sample surface and the light can optimally penetrate in the sample.

According to another exemplary embodiment of the present disclosure, the biopsy sample with the magnetic element is provided in a well of a well plate comprising a plurality of wells for scanning various biopsy samples. In this embodiment, the biopsy sample is stably fixed in the well by means of the application of the magnetic force of the external magnetic element.

The skilled reader understands that a well plate is a commercially available well plate, for example with 24 wells within one plate. Other sizes or formats are of course also possible. So a well plate usually comprises a series of recipients that can accommodate a fluid sample. Preferably, the bottom of the well plate is transparent to favor imaging the sample within the well.

According to another exemplary embodiment of the present disclosure, a plurality of biopsy samples are provided, each biopsy sample comprising an magnetic element attached thereto, wherein each biopsy sample is separately contained in its own well of a well plate comprising a plurality of wells for scanning various biopsy samples. In this embodiment, the method further defines to either:
A) sequentially immobilize and/or rotate the plurality of biopsy samples by sequentially applying the magnetic force of the external magnetic element onto the magnetic elements, or to
B) immobilize and/or rotate the plurality of biopsy samples in parallel by using at least two external magnetic elements, preferably using one external magnetic element per well, for immobilizing and/or rotating the plurality of biopsy samples.

When handling several biopsies each sample is placed in a different well in the well plate, while already attached to a magnetic element, e.g. a permanent magnet or magnetic material, out of e.g. iron, cobalt, nickel, etc.

In one embodiment the imaging device as presented herein and exemplarily shown in Figure 5 is configured for carrying out such a sequential or parallel handling.

According to another exemplary embodiment of the present disclosure location of the biopsy sample is determined by locating the magnetic element, preferably by locating an edge of the magnetic element.

Typically, after taking the biopsy, the sample is cleared and is placed in clearing fluid, preferably with a matching refractive index. In these conditions, the sample is very difficult to be localized as there is very little contrast between the sample and the surrounding fluid when no magnetic element is present. However, in bright field microscopy mode the sample is easy to be located based on the contrast that the magnetic element provides. The magnetic element is clearly visible and this helps one to localize the sample. One does not even need to be so precise to localize the edge of the magnetic element, but locating an edge of the magnetic element is one embodiment. Localization is also possible in fluorescence microscopy mode. The magnetic element might not possess intrinsic fluorescence. Therefore, they can preferably be marked with a fluorescent alignment marker.

Thus, according to another exemplary embodiment of the present disclosure, the magnetic element is provided with a coating and/or at least one alignment mark, preferably a fluorescent alignment mark, and the method further comprises the step of using the coating and/or the alignment mark, preferably the fluorescent alignment mark, of the magnetic element for imaging purposes.

According to another exemplary embodiment of the present disclosure, the step of attaching the magnetic element to the biopsy sample is carried out by gluing the magnetic element to the biopsy sample with a glue, preferably with a glue, which is stable in a clearing fluid/ refractive index matching fluid.

A glue that is bio compatible and can hold the sample to the magnetic element should be chosen. Also the glue should not dissolve in the clearing liquid. The inventors of the present invention have tested cyanoacrylate, which lead to very good results. As an alternative, epoxy type of glue could work as well.

According to second aspect, a biopsy sample for being handled with an external magnetic field is presented, wherein the biopsy sample comprises a magnetic element, which is attached to the biopsy sample. Exemplary embodiments thereof can be seen in Figs. 1, 2 and 3.

According to third aspect, a system for imaging a biopsy sample comprising a magnetic element and for magnetically handling the biopsy sample is presented. The system comprises a receiving section for receiving the biopsy sample to which the magnetic element is attached, wherein the biopsy sample is preferably contained in a fluid within a vessel. The system also comprises an imaging device, like e.g. a microscope, for imaging the biopsy sample when being received in the receiving section. The system also comprises a control unit configured for controlling an external magnetic element for applying a magnetic force onto the magnetic element attached to the biopsy sample to handle the biopsy sample.

The system or microscope may further comprise an image processing unit adapted to detect the magnetic element in an image of the sample. The image processing unit may further be configured to detect the sample via prior detection of the magnetic element.

The following embodiments of this imaging system can be combined, unless explicitly mentioned herein.

In one embodiment, the system for imaging a biopsy sample is configured to carry out the method of handling the biopsy sample as mentioned hereinbefore and hereinafter. In this embodiment, the isolated biopsy sample is provided with an attached magnetic element and the system for imaging is configured for using an external magnetic element for applying a magnetic force onto the magnetic element of the biopsy sample to handle the biopsy sample.

In one embodiment, the control unit is configured for controlling the magnetic field of the external magnetic element such that the biopsy sample is immobilized and/or rotated in the vessel during the imaging or during different images taken by the imaging device. In other words, the system for imaging a biopsy sample is configured for causing a movement of the biopsy sample, preferably a rotation of the biopsy sample, by means of the application of the magnetic force of the external magnetic element onto the magnetic element attached to the biopsy sample. In this embodiment, the external magnetic element can preferably be provided outside of the vessel in which the sample is located and the magnetic force is applied onto the magnetic element and thereby onto the biopsy sample through the vessel.

In a further embodiment, the system is configured to cause a movement of the vessel in which the sample is provided.

This may, for example, be carried out based on the detected coating and/or the alignment mark of the magnetic element, i.e. based on the determined location of the coating/ location of the alignment mark, as will be described in more detail hereinafter. In another exemplary embodiment thereof the movement is caused based on the determined location of the magnetic element and/or based on the determined location of the sample, as will be described in more detail hereinafter.

In another embodiment, the control unit is configured for controlling the external magnetic element thereby causing a rotation of the biopsy sample by means of the magnetic force, and the control unit is configured to control the imaging device to scan the biopsy sample by imaging the biopsy sample from different rotational positions.

In one embodiment the system comprises the external magnetic element. A permanent magnet, an electro-magnet, and/or a combination thereof may be used.

In a further embodiment, the system comprises a control unit configured to control the activation, strength and/or orientation of the magnetic field exhibited by the external magnetic element. For example, in case of an electro-magnetic element the control unit controls the intensity of electrical control currents, which cause the magnetic field in the external magnetic element.

To control the external magnetic element one need to steer the controlling magnetic field. If the field is generated via a permanent magnet this can be achieved by, for example, mechanically moving the external magnetic element. In case that the field is generated by an electro-magnet the possibilities are more rich. One could move the electro magnet or simply have a design that would allow magnetic steering with no moving parts; for example by using a multi coil construction. Of course other possibilities and especially mixtures of embodiments mentioned before can be used to control the external magnetic element and to achieve the desired handling of the biopsy sample via the magnetic force applied to the magnetic element attached to the biopsy sample.

In one embodiment the system is for imaging a plurality of biopsy samples, each biopsy sample comprising a magnetic element attached thereto, wherein each biopsy sample is separately contained in its own well of a well plate comprising a plurality of wells for scanning various biopsy samples. The control unit is configured for sequentially immobilizing and/or rotating the plurality of biopsy samples by sequentially applying the magnetic force of the external magnetic element onto the magnetic elements. Alternatively, the control unit is configured for immobilizing and/or rotating the plurality of biopsy samples in parallel by using at least two external magnetic elements, preferably using one external magnetic element per well, for immobilizing and/or rotating the plurality of biopsy samples.

In one further embodiment the system is configured for determining a location of the biopsy sample by locating the magnetic element.

In one further embodiment the system comprises an image processing unit adapted to detect the magnetic element in an image of the sample thereby determining a location of the magnetic element, and the imaging device is configured for adapting at least one image acquisition parameter setting as a function of the determined location of the magnetic element.

Exemplary image acquisition parameters are e.g. the shutter time, the aperture opening, the focal length, the focal plane, the light sensitivity, the relative position of the sample to the optical axis of the imaging device, which can be controlled e.g. by a positioning system as described herein. Also other image acquisition parameters can be used.

In another embodiment the imaging device is configured for initially focusing on the magnetic element and to generate at least one first image of the sample with this initial focusing. Furthermore, the imaging device is configured for processing the at least one first image thereby detecting a location of the sample. For this purpose, a processing unit may be used which is part of the system. The imaging device is also configured for adjusting at least one focus parameter based on the detected location of the sample for imaging the sample.

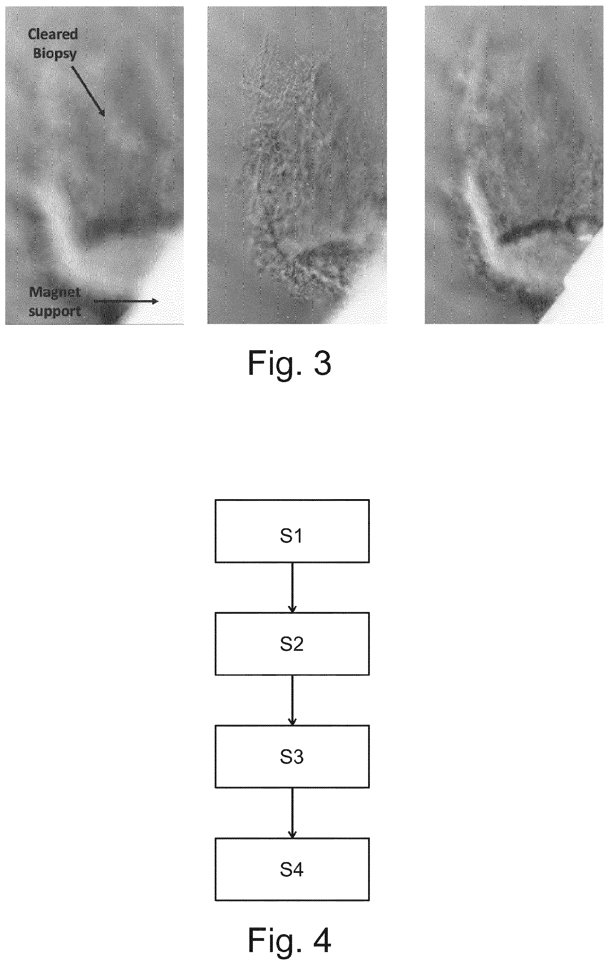

As is for example shown in Figure 3, with this embodiment of the system a process can be carried out in which the process starts setting the focus on the magnetic element to find the biopsy sample, and then change the focus onto the sample. In this embodiment this can be done automatically or semi-automatically by means of the system described herein. This exemplary device is hence configured to carry out the steps of focusing on the magnetic element for its detection, detecting the sample location and adjusting the focus range for the sample image acquisition. In other words, a two-step focusing approach is presented. After taking the biopsy the sample is cleared and is placed in a clearing fluid, preferably with a matching refractive index. In these conditions, the sample is very difficult to be localized as there is very little contrast between the sample and the surrounding fluid when no magnetic element is present. However, since the present invention makes use of the magnetic element it is possible for the system to locate first the magnetic element and to then locate the sample based on the contrast that the magnetic element provides. The magnetic element is clearly visible and this allows an automatic determination of its location with the system described herein.

According to another embodiment the control unit is configured for causing a movement of the biopsy sample by controlling the external magnetic element based on the determined location of the magnetic element and/or based on the determined location of the sample. In other words the system can control the external magnetic element in a cooperative manner with the acquisition of images. The system may thus analyze images taken by the imaging device and may e.g. generate control signals in order to adapt the control of the external magnetic element to achieve e.g. a desired movement of the sample relative to the imaging device. Alternatively, or in addition, the system may control e.g. an X-Y-Z stage or an X-Y stage of the imaging system, e.g. of the microscope, to change the relative position of the sample to the optical axis of the imaging device.

Thus, according to another embodiment the system comprises a positioning system, e.g. an X-Y-Z stage, for positioning the received sample in the receiving section, and the positioning system is configured for moving the received biopsy sample based on the determined location of the magnetic element and/or based on the determined location of the sample.

With this embodiment the system can reposition the sample in e.g. 3 directions based on the result of the result of the previous image acquisition. The sample may be moved, for example, slightly to left or right, and/or can be moved closer or further away from the objective lens of the imaging device, in case the need for such a movement is identified by the image processing unit.

In another embodiment an imaging processing unit is comprised which is configured for detecting a coating and/or an alignment mark of the magnetic element.

The system may further be configured to change the control of the external magnetic element, and/or the positioning system, and/or the image acquisition parameter settings based on the detected coating and/or an alignment mark, i.e. based on the determined location of the coating/ location of the alignment mark.

As mentioned hereinbefore, all these embodiments of the imaging system can be combined, unless explicitly mentioned herein.

According to another aspect a program element for handling a biopsy sample with an imaging system is presented, which program element, when being executed by a processor of the imaging device, is adapted to carry out the step of controlling an external magnetic element for applying a magnetic force onto a magnetic element, which is attached to the biopsy sample to handle the biopsy sample.

The program element may be part of a computer program, but it can also be an entire program by itself. For example, the computer program element may be used to update an already existing computer program to get to the program of the present aspect. The program element may be stored within the system for imaging a biopsy sample as presented herein and may cause this system to carry out the method described herein and/or carry out the functionalities of the system described herein. For example, the program element may cause the system to rotate the biopsy sample by means of the magnetic force, and to scan the biopsy sample by imaging the biopsy sample from different rotational positions, as is described herein. The same holds true for the program element and other functionalities of the system.

According to another aspect of the present invention a well plate is presented to which the external magnetic element is attached inside the well plate. This solution provides a simple possibility to stabilize the biopsy sample. In particular, the external magnetic element can be inside the body of the well plate, i.e. not on a surface of the well plate, in particular not on a surface inside one of the wells. Also this aspect can be combined with other embodiments and aspects of the present invention described herein.

These, and other, aspects of the invention will be apparent from and elucidate it with reference to the following figures and the embodiments described hereinafter.

### BRIEF DESCRIPTION OF THE DRAWINGS

Fig 1 shows a schematic drawing of a biopsy sample to which the magnetic element is attached according to an exemplary embodiment of the present disclosure.
Fig. 2 shows a cleared biopsy sample attached to a magnet fixed for imaging into the well plate according to an exemplary embodiment of the present disclosure.
Fig. 3 shows three photos of a cleared biopsy sample imaged in a clearing fluid according to an exemplary embodiment of the present disclosure.
Fig. 4 shows a flow diagram of a method of handling a biopsy sample with magnetic forces according to an exemplary embodiment of the present disclosure.
Fig. 5 schematically shows a system for imaging a biopsy sample and for magnetically handling the biopsy sample according to an exemplary embodiment of the present disclosure.

The figures are schematic and not at scale and are only used for graphical purposes.

### DETAILED DESCRIPTION OF EMBODIMENTS

Figure 1 schematically shows a biopsy sample 100 for being handled with an external magnetic field. Such an external magnetic field can be provided by, for example, the system as exemplary shown in Figure 5, but can also be provided by the user manually. For biopsy handling, the inventors of the present invention propose to attach the biopsy to a magnetic element 101 /a magnetic support 101. For example, one can glue the sample to either a permanent magnet or a ferromagnetic material. The manipulation or holding of the sample can be performed easily by means of a magnetic field or an electro-magnetic field. The sample can be hold immobile during the imaging while still immersed into the clearing fluid or it can be rotated for several imaging angles.

An adhesive 102 is used to attach the magnetic element 101 to the biopsy sample 100. In one embodiment, a cyanoacrylate glue is used for the attachment. Furthermore, the magnetic element 101 comprises an optional coating 103. The advantage of such a coating 103 is that the location of the sample 100 is known when it is attached to the magnetic element 101 in a scanning set up. Since the sample 100 has the same refractive index as the surrounding fluid it is difficult to detect the sample location prior to scanning when no magnetic element 101 is present. When attached to magnet the operator can swiftly determine the location of the sample 100 by e.g. locating the edge of the magnet and commence scanning. The magnetic element 101 can also be provided with at least one alignment mark, preferably a fluorescent alignment mark. In particular, the knowledge about the position and orientation of the sample 100 makes it possible to connect the results of the pathological analysis of the biopsy to the location inside the body.

One key advantage of this approach is that the biopsy sample 100 can be manipulated while it is inside the clearing/index matching fluid in a very simple manner from the outside of the vessel, e.g. a well, the sample is in. This approach is particularly valuable if one wants to rotate the biopsy sample so that the biopsy sample can be imaged/scanned from various angles. A further advantage of a biopsy sample 100 prepared like this is that the sample can be fixed stably in a typical well plate used for scanning various samples.

In other words, a new approach is presented for handling 3D biopsies that makes use of a magnetic field. The biopsy sample is attached to a magnetic element/magnetic support, e.g. a permanent or a ferromagnetic material, e.g. iron, cobalt, nickel, and it can be manipulated by means of a magnetic field and/or an electro-magnetic field. A further advantage of this method is that the sample can be fixed stably in a typical well plate used for scanning various samples. In previous experiments, the inventors of the present invention had the problem that in these typically used well plates the biopsy sample would move between scans at various (optical) depths, thereby introducing motion artifacts. This problem is resolved or eliminated by the biopsy sample shown in Figure 1.

With the present invention, the biopsy sample 100 can be moved manually, semi-automatically, or automatically, e.g. by a system for imaging a biopsy sample as for example shown in Figure 5. This movement of the sample 100 may be caused after the position of the sample was determined. Also this determination of the sample position can be carried out manually, semi-automatically, or automatically, e.g. by said system 500. First, the position of the magnetic element 101 may be determined due to a high contrast of the magnetic element 101. This may be done manually or by e.g. an image processing unit of an imaging device of said system 500. Since the relative position of the sample 100 with respect to the magnetic element 101 is known by the user and/or the system, the position of the sample 100 can be determined. The movement may then be caused as a function of said determined sample position. For example, an adjustment of the sample position in the X-Y-plane is desired, which is typically perpendicular to the optical axis of the imaging device of said system shown in Figure 5. In such a case a positioning system, e.g. an X-Y-stage may be activated with control signals to move the sample 100 into the desired position. Also a re-orientation of the sample 100 may be caused based on the determined sample position. Thus, an extra rotation step may be carried out to rotate the sample 100 relative to the imaging device before the imaging/scanning of the sample 100 is started. Also this imaging/scanning can be carried out manually, semi-automatically, or automatically, e.g. by a system 500 for imaging a biopsy sample as shown in Figure 5.

In Figure 2 a cleared sample 203 attached to the end of a permanent magnet 204 and immobilized into a well plate 200 for imaging purposes is shown. The image is taken in the air for highlighting the clear biopsy sample 203. When submerged into the clearing fluid 202 the sample without the magnetic element 204 is barely visible. For this example, the sample 203 was glued to the magnetic element 204 with cyanoacrylate glue, a bond which proved stable in the clearing fluid 202. The biopsy fixture proved solid and stable against stage scanning and the sample position did not change during the imaging cycle. We could easily control the rotation of the sample by means of an external magnet 205. The method as described herein could thus be carried out manually. It is also possible to use an imaging system, like e.g. a microscope, or a combination thereof, for carrying out the method as will be in more detail hereinafter.

In an exemplary embodiment, the set up as shown in Figure 2 could be used together with a system as shown in Figure 5. In other words, the system for imaging a biopsy sample of Figure 5 can be configured to use the external magnetic element 205. In this embodiment the system 500 controls external magnetic element 205 to e.g. rotate the biopsy sample 203 to allow for different imaging angles for the imaging device used by system 500. In this way, system 500 is configured for causing a movement of the biopsy sample, preferably a rotation of the biopsy sample, by means of the application of the magnetic force of the external magnetic element onto the magnetic element attached to the biopsy sample. As can be seen, the external magnetic element 205 is provided outside of the vessel 200 in which the sample 203 is located and the magnetic force is applied onto the magnetic element 204 and thereby onto the biopsy sample 203 through the vessel 200.

Figure 3 shows three photos of a cleared biopsy imaged in a clearing fluid. The photo on the left shows a situation where the sample is not in focus, but the focus is under the sample. In the middle photo the sample is in focus. In the right photo the sample is not in focus, but the focus is above the sample, and the magnet element attached to the sample is in focus. These images are taken with 850nm transmission illumination. A microscope might be used to get such images. In another embodiment the imaging device is configured for initially focusing on the magnetic element and to generate at least one first image of the sample with this initial focusing. Furthermore, the imaging device is configured for processing the at least one first image thereby detecting a location of the sample. For this purpose, a processing unit may be used which is part of the system. The imaging device is also configured for adjusting at least one focus parameter based on the detected location of the sample for imaging the sample. Thus, with an embodiment of the system of the present invention a process can be carried out which starts setting the focus on the magnetic element to find the biopsy sample, and then change the focus onto the sample. In this embodiment, this can be done automatically or semi-automatically by means of the system described herein. This exemplary device is hence configured to carry out the steps of focusing on the magnetic element for its detection, detecting the sample location and adjusting the focus range for the sample image acquisition. In other words, a two-step focusing approach is presented. After taking the biopsy, the sample is cleared and is placed in a clearing fluid, preferably with a matching refractive index. In these conditions, the sample is very difficult to be localized as there is very little contrast between the sample and the surrounding fluid when no magnetic element is present. However, since the present invention makes use of the magnetic element it is possible for the system to locate first the magnetic element and to then locate the sample based on the contrast that the magnetic element provides. The magnetic element is clearly visible and this allows an automatic determination of its location with the system described herein.

Figure 4 shows a flow diagram of a method of handling a biopsy sample with magnetic forces according to an exemplary embodiment of the present disclosure. In a first step S 1, an isolated biopsy sample is provided. Attaching a magnetic element to the biopsy sample is done in step S2. The step of attaching the magnetic element to the biopsy sample can be carried out after the biopsy sample is cleared, or can alternatively be carried out directly in a biopsy device. In S3, an external magnetic element is used for applying a magnetic force onto the magnetic element, which is attached to the biopsy sample, to handle the biopsy sample. Furthermore, in step S4 the biopsy sample is immobilized in a fluid within a vessel by means of the application of the magnetic force of the external magnetic element.

The method shown in Figure 4 can be supplemented, of course, by several additional method steps. In particular, a plurality of biopsy samples are provided, each biopsy sample comprising a magnetic element attached thereto. Further, each biopsy sample is separately contained in its own well of a well plate comprising a plurality of wells for scanning various biopsy samples.

In a sequential mode, the plurality of biopsy samples are immobilized and/or rotated by sequentially applying the magnetic force of the external magnetic element onto the magnetic elements.

Alternatively, in a parallel mode, the plurality of biopsy samples are immobilized and/or rotated in parallel by using at least two external magnetic elements, preferably using one external magnetic element per well, for immobilizing and/or rotating the plurality of biopsy samples. Such a procedure can be carried out by, for example, a system 500 depicted in Figure 5.

Figure 5 shows a system 500 for imaging a biopsy sample 203 with a magnetic element 204 and for magnetically handling the biopsy sample 203. The system 500 comprises a receiving section 505 for receiving the biopsy sample 203 to which the magnetic element 204 is attached, wherein the biopsy sample 203 is preferably contained in a fluid 202 within a vessel 200, which is a well plate in this embodiment. The system 500 also comprises an imaging device, embodied as a microscope here, for imaging the biopsy sample 203 when being received in the receiving section 505. System 500 also has a control unit 501 configured for controlling an external magnetic element 502 for applying a magnetic force onto the magnetic element attached to the biopsy sample to handle the biopsy sample. Electrical connections 504 are expanding from the control unit 501 to the external magnetic element 502, which is an electro-magnetic element. By controlling the electrical current, the strength of the magnetic field of magnet 502 is controlled to achieve the desired handling of the biopsy sample received in system 500.

In principle, a system 500 like the one shown in Figure 5 may cause the desired handling of the biopsy sample by steering the magnetic field of the external magnetic element. If the field is generated via a permanent magnet this can be achieved by, for example, mechanically moving the external magnetic element. In case that the field is generated by an electro-magnet, as is the case for the embodiment shown in Figure 5, the possibilities are richer. One could also move the electro-magnet or simply have a design that would allow magnetic steering with no moving parts; for example by using a multi coil construction. Of course, other possibilities and especially mixtures of embodiments mentioned before can be used to control the external magnetic element and to achieve the desired handling of the biopsy sample via the magnetic force applied to the magnetic element attached to the biopsy sample.

Furthermore, the imaging can be done by several different devices and imaging methods as preferred by the user of the present invention. For example, a microscope might be used as imaging device, in particular, a normal microscope, an inverted microscope, a light sheet microscope or a confocal microscope.

Typically, the isolated biopsy sample is provided together with the attached magnetic element within a clearing fluid/ a refractive index matching fluid in a vessel, which is then placed on the receiving section 505 of system 500. The isolated biopsy sample is then imaged by the system 500 within the clearing fluid/refractive index matching fluid in the vessel.

In a further embodiment, the system 500 shown in Figure 5 is configured for imaging a plurality of biopsy samples, each biopsy sample comprising a magnetic element attached thereto. Each biopsy sample can separately be contained, e.g., in its own well of a well plate comprising a plurality of wells for scanning various biopsy samples. The system 500 is capable of stably fixing the biopsy samples in the well by means of the application of the magnetic force of the external magnetic element. The control unit can be configured for sequentially immobilizing and/or rotating the plurality of biopsy samples by sequentially applying the magnetic force of the external magnetic element onto the magnetic elements. Alternatively, the control unit can be configured for immobilizing and/or rotating the plurality of biopsy samples in parallel by using at least two external magnetic elements, preferably using one external magnetic element per well, for immobilizing and/or rotating the plurality of biopsy samples. For these purposes, the system 500 can comprise the one or more external magnetic elements.

In a further embodiment of the system 500 of Figure 5, the imaging system is configured for determining a location of the biopsy sample by locating the magnetic element, preferably by locating an edge of the magnetic element.

In a further embodiment of the system 500 the imaging device is configured for initially focusing on the magnetic element and to generate at least one first image of the sample with this initial focusing, wherein the image processing unit is configured for processing the at least one first image thereby determining a location of the sample. The imaging device is configured for adjusting at least one focus parameter based on the detected location of the sample for focusing and imaging the sample.

The system 500 may further comprise an imaging processing unit configured for detecting a coating and/or an alignment mark of the magnetic element. It may further be configured to change the control of the external magnetic element, and/or the positioning system, and/or the image acquisition parameter settings based on the detected coating and/or an alignment mark of the magnetic element, i.e. based on the determined location of the coating/ location of the alignment mark.

In an embodiment a microscope similar to the device 500 in Fig. 5 is presented, in which a program element is stored for handling a biopsy sample with the microscope. The program element, when being executed by a processor of the microscope, is adapted to carry out the step of controlling an external magnetic element for applying a magnetic force onto a magnetic element, which is attached to the biopsy sample to handle, e.g. to rotate the biopsy sample. The program element may cause this system to carry out the method described herein and/or carry out the functionalities of the system described herein. For example, the program element may cause the system to rotate the biopsy sample by means of the magnetic force, and to scan the biopsy sample by imaging the biopsy sample from different rotational positions, as is described in herein.

In the claims, the word "comprising" does not exclude other elements or steps. The indefinite article "a" or "an" does not exclude a plurality. A single processor, or other unit, may fulfil the functions of several items recited in the claims. The mere fact that certain measures are recited in mutually different dependent claims does not indicate that a combination of these measures cannot be used to advantage.

Any reference signs in the claims should not be construed as limiting the scope of the claims.

## Claims

1. Method of handling a biopsy sample (100), the method comprising the steps of
providing an isolated biopsy sample to which a magnetic element (101) is attached (step S1), and
using an external magnetic element (205) for applying a magnetic force onto the magnetic element (101), which is attached to the biopsy sample (100), to handle the biopsy sample (step S3).

2. Method according to claim 1, the method further comprising the step
immobilizing the biopsy sample (203) in a fluid within a vessel (200) by means of the application of the magnetic force of the external magnetic element (step S4).

3. Method according to any of the preceding claims, the method further comprising the step of:
causing a movement of the biopsy sample, preferably a rotation of the biopsy sample, by means of the application of the magnetic force of the external magnetic element onto the magnetic element attached to the biopsy sample.

4. Method according to any of the preceding claims,
wherein the biopsy sample, to which the magnetic element is attached, is provided in a well of a well plate comprising a plurality of wells for scanning various biopsy samples,
and the method comprising the step of:
stably fixing the biopsy sample in the well by means of the application of the magnetic force of the external magnetic element.

5. Method according to any of the preceding claims,
wherein a plurality of biopsy samples are provided, each biopsy sample comprising an magnetic element attached thereto,
wherein each biopsy sample is separately contained in its own well of a well plate comprising a plurality of wells for scanning various biopsy samples,
and the method further comprising the step of,
A) sequentially immobilizing and/or rotating the plurality of biopsy samples by sequentially applying the magnetic force of the external magnetic element onto the magnetic elements,
or
B) immobilizing and/or rotating the plurality of biopsy samples in parallel by using at least two external magnetic elements, preferably using one external magnetic element per well, for immobilizing and/or rotating the plurality of biopsy samples.

6. Method of imaging a biopsy sample, the method comprising the steps of the method of handling the biopsy sample according to any of the preceding claims, and comprising the steps of:
imaging the biopsy sample thereby creating an image of the biopsy sample.

7. Method according to claim 6, wherein the imaging is performed by scanning the biopsy sample and the method comprises the step of rotating the biopsy sample during the scanning, preferably between different image frames.

8. Method according to any of the preceding claims
wherein the isolated biopsy sample (100) is provided together with the attached magnetic element within a clearing fluid/ a refractive index matching fluid (202) in a vessel (200), and
wherein the isolated biopsy sample (100) is imaged within the clearing fluid/refractive index matching fluid (202) in the vessel.

9. Method according to any of the preceding claims, further comprising the step of:
determining a location of the biopsy sample by locating the magnetic element, preferably by locating an edge of the magnetic element.

10. Method according to any of the preceding claims,
wherein the magnetic element is provided with a coating and/or at least one alignment mark, preferably a fluorescent alignment mark, and the method further comprises the step of:
using the coating and/or the alignment mark, preferably the fluorescent alignment mark, of the magnetic element for imaging purposes.

11. Biopsy sample (100) for being handled with an external magnetic field, wherein the biopsy sample comprises a magnetic element (101), which is attached to the biopsy sample.

12. System (500) for imaging a biopsy sample (203) comprising a magnetic element (204) and for magnetically handling the biopsy sample, the system comprising:
a receiving section (505) for receiving the biopsy sample (203) to which the magnetic element (204) is attached, wherein the biopsy sample is preferably contained in a fluid within a vessel (200),
an imaging device for imaging the biopsy sample (203) when being received in the receiving section (505), and
a control unit (501) configured for controlling an external magnetic element (205, 502) for applying a magnetic force onto the magnetic element attached to the biopsy sample to handle the biopsy sample.

13. System according to claim 12, further comprising
an image processing unit adapted to detect the magnetic element in an image of the sample thereby determining a location of the magnetic element, and
wherein the imaging system is configured for adapting at least one image acquisition parameter setting as a function of the determined location of the magnetic element.

14. System according to claim 13,
wherein the imaging device is configured for initially focusing on the magnetic element and to generate at least one first image of the sample with this initial focusing,
wherein the image processing unit is configured for processing the at least one first image thereby determining a location of the sample, and
wherein the imaging device is configured for adjusting at least one focus parameter based on the detected location of the sample for focusing and imaging the sample.

15. System according to claim 13 or 14,
wherein the system comprises a positioning system for positioning the received sample in the receiving section, and
wherein the positioning system is configured for repositioning the received biopsy sample based on the determined location of the magnetic element and/or based on the determined location of the sample.

16. System according to any of the claims 13 or 15,
wherein the imaging device is configured for causing a movement of the biopsy sample by controlling the external magnetic element based on the determined location of the magnetic element and/or based on the determined location of the sample.

17. System according to any of the claims 12 to 16, further comprising
an imaging processing unit configured for detecting a coating and/or an alignment mark of the magnetic element.

18. System according to claim 17,
wherein the system is configured to change the control of the external magnetic element and/or image acquisition parameter settings of the imaging device based on the detected coating and/or the detected alignment mark.

19. System according to any of the claims 12 to 17,
wherein the system is configured for imaging a plurality of biopsy samples, each biopsy sample comprising a magnetic element attached thereto, wherein each biopsy sample is separately contained in its own well of a well plate comprising a plurality of wells for scanning various biopsy samples, and
A) the control unit is configured for sequentially immobilizing and/or rotating the plurality of biopsy samples by sequentially applying the magnetic force of the external magnetic element onto the magnetic elements, or
B) the control unit is configured for immobilizing and/or rotating the plurality of biopsy samples in parallel by using at least two external magnetic elements, preferably using one external magnetic element per well, for immobilizing and/or rotating the plurality of biopsy samples.
